# EUROPÄISCHE PATENTSCHRIFT

(11) **EP 3 250 838 B1**
(45) Veröffentlichungstag und Bekanntmachung des Hinweises auf die Patenterteilung: **24.10.2018**
(21) Anmeldenummer: 16705018.6
(22) Anmeldetag: 20.01.2016
(51) Int. Cl.: F16D 43/18, F16D 45/00, F16D 15/00, F16D 41/063

(54) **FLIEHKRAFTKUPPLUNG**
CENTRIFUGAL CLUTCH
EMBRAYAGE CENTRIFUGE

(30) Priorität: 30.01.2015 DE 102015201591
(43) Veröffentlichungstag der Anmeldung: 06.12.2017
(73) Patentinhaber: Schaeffler Technologies AG & Co. KG, 91074 Herzogenaurach (DE)
(72) Erfinder: KURTH, Franz, 90429 Nürnberg (DE); SCHIMPF, Ralph, 90766 Fürth (DE)
(86) Internationale Anmeldenummer: PCT/DE2016/200025
(87) Internationale Veröffentlichungsnummer: WO 2016/119786

(56) Entgegenhaltungen:
- EP-A1- 1 544 435
- WO-A1-2011/023157
- DE-A1-102013 213 183
- US-A1- 2015 027 840

## Beschreibung

Die Erfindung betrifft eine Fliehkraftkupplung, insbesondere für einen Antriebsstrang eines Kraftrades oder sonstigen Kraftfahrzeugs, mit einem inneren Rotationselement, dessen Außenumfang mehrere Rampen aufweist, mit mindestens einer das innere Rotationselement umgebenden Fliehgewichtseinrichtung, die mehrere umfänglich verteilte Fliehgewichte aufweist und deren Innenumfang mehrere Gegenrampen zur Bildung eines Form- und/oder Reibschlusses mit den Rampen des inneren Rotationselements aufweist, und mit einem die mindestens eine Fliehgewichtseinrichtung umgebenden äußeren Rotationselement, wobei die Fliehgewichte der Fliehgewichtseinrichtung zur Erzeugung eines Reibschlusses mit dem äußeren Rotationselement über einen Reibbelag entgegen der Wirkung einer Federanordnung nach außen gegen einen Innenumfang des äußeren Rotationselements pressbar sind.

Derartige Fliehkraftkupplungen werden oft in Antriebssträngen von Motorrollern verwendet. Dabei sind die Fliehgewichte mit den Kupplungsbelägen in der Fliehgewichtseinrichtung über den Umfang verteilt angeordnet und mittels einer Anordnung von Federn oder anderer Energiespeicher nach innen verspannt. Durch die Rotation des inneren Rotationselements wird eine Fliehkraft erzeugt, die dazu führt, dass die Fliehgewichte über die Kupplungsbeläge Kontakt zum äußeren Rotationselement bekommen und dieses antreiben.

Die DE 10 2008 030 657 A1 zeigt eine entsprechende Fliehkraftkupplung. Diese umfasst (i) eine Nabe als inneres Rotationselement, deren Außenumfang mehrere rampenartigen Anlageflächen aufweist, (ii) eine das innere Rotationselement umgebende Fliehgewichtseinrichtung, die zwei umfänglich verteilte Fliehgewichte und zwei Zugfedern aufweist und deren Innenumfang mehrere rampenartige Gegenflächen zur Bildung eines Formschlusses mit den Anlageflächen der Nabe zeigt, und (iii) eine die mindestens eine Fliehgewichtseinrichtung umgebende Riemenscheibe als äußeres Rotationselement, wobei die Fliehgewichte der Fliehkrafteinrichtung zur Erzeugung eines Reibschlusses mit der Riemenscheibe von der Fliehkraft entgegen der Wirkung der Energiespeicherelemente nach außen gegen den Innenumfang der Riemenscheibe pressbar sind.

Die WO 2011/023157 A1 offenbart ein Schwungrad, das auf einer Abtriebswelle einer Brennkraftmaschine fest aufgenommen ist. Das Schwungrad weist einen Anlasserzahnkranz auf, der mittels eines Freilaufs von der Abtriebswelle abkoppelbar ist. Der Freilauf ist radial zwischen dem Anlasserzahnkranz und Mitteln zur Ankoppelung des Freilaufs an ein Eingangsteil einer Kupplung angeordnet.

Es ist Aufgabe der Erfindung eine Fliehkraftkupplung anzugeben, die axial besonders kompakt aufgebaut ist.

Die Lösung der Aufgabe erfolgt erfindungsgemäß durch die Merkmale des unabhängigen Anspruchs 1. Bevorzugte Ausgestaltungen der Erfindung sind in den Unteransprüchen angegeben, die jeweils einzeln oder in Kombination einen Aspekt der Erfindung darstellen können.

Bei der erfindungsgemäßen Fliehkraftkupplung ist vorgesehen, dass die Fliehgewichtseinrichtung von einem im Wesentlichen ringförmigen Plattengebilde mit einem einzelnen Plattenelement oder einem Stapel aus mehreren Plattenelementen gebildet wird, wobei das Plattengebilde mehrere umfänglich verteilte Umfangsabschnitte aufweist, die die Fliehgewichte bilden. Bei hinreichend hoher Drehzahl n des inneren Rotationselements werden die Fliehgewichte und mit ihnen das gesamte Plattengebilde radial nach außen gedrückt. Am Innenumfang des Plattengebildes befinden sich die Gegenrampen, auf denen die einzelnen Rampen, bei Kontakt des Plattengebildes mit dem äußeren Rotationselement und somit einer Erzeugung eines entgegen der Drehrichtung gerichteten Initialmoments, hinauf wandern und somit einen Selbstverstärkungseffekt der Klemmwirkung einleiten.

Insbesondere ist dabei vorgesehen, dass die Fliehkraftkupplung in der Art einer unter dem Begriff "Wedge-Blade Kupplung" oder "Wedge Clutch" bekannten Freilaufkupplung ausgebildet ist. Eine Beschreibung dieser Freilaufkupplung ist beispielsweise in der Druckschrift WO 2014/011610 A1 zu finden. Die Fliehkraftkupplung ist nun durch die Verwendung dieser "Wedge Clutch"-artigen Bauweise axial deutlich kompakter ausgeführt. Der dort auftretende Selbstverstärkungseffekt führt dazu, dass eine rasche Mitnahme des äußeren Rotationselements erfolgt, und somit der Verschleiß gering gehalten wird.

Gemäß einer bevorzugten Ausgestaltung der Erfindung werden die Federanordnungen von federnd ausgebildeten Komponenten des mindestens einen Plattenelements und/oder mindestens einem zusätzlichen Federelement gebildet. Die Federanordnung kann also Plattengebilde-intern ausgebildet sein oder auch zusätzliche Federelemente aufweisen.

Dabei ist insbesondere vorgesehen, dass zwischen zumindest zwei der die Fliehgewichte bildenden Umfangsabschnitten des Plattengebildes eine der federnd ausgestalteten Komponenten des Plattengebildes angeordnet ist. Bevorzugt sind zwischen den, die Fliehgewichte bildenden Umfangsabschnitten des Plattengebildes mehrere der federnd ausgestalteten Komponenten des Plattengebildes angeordnet.

Gemäß einer weiteren bevorzugten Ausgestaltung der Erfindung ist vorgesehen, dass das mindestens eine zusätzliche Federelement zwischen Plattengebilde und innerem Rotationselement angeordnet ist. Das Federelement ist dabei bevorzugt als Zugfeder ausgebildet.

Bei einer bevorzugten Ausführungsform der Erfindung ist vorgesehen, dass die Fliehkraftkupplung derart ausgestaltet ist, dass sich bei einer Drehzahl n = 0 des Plattengebildes ein Ringspalt zwischen dem Außenumfang des Plattengebildes und dem Innenumfang des äußeren Rotationselements ergibt.

Prinzipiell könnte das Plattengebilde den Reibbelag an seinem Außenumfang aufweisen. Bevorzugt ist jedoch vorgesehen, dass das äußere Rotationselement den Reibbelag an seinem Innenumfang aufweist.

Gemäß einer weiteren bevorzugten Ausführungsform der Erfindung ist vorgesehen, dass das mindestens eine Plattenelement einstückig ausgebildet ist. Dabei ist das mindestens eine einstückige Plattenelement aus einem hinreichend elastischen Material.

Gemäß noch einer weiteren bevorzugten Ausgestaltung der Erfindung ist vorgesehen, dass sich der Reibbelag am Innenumfang des Außenrings befindet und bei Rotation Kontakt zu den Wedges hat.

Gemäß einer weiteren bevorzugten Ausgestaltung der Erfindung ist in einem, zwischen zwei der die Fliehgewichte bildenden Umfangsabschnitten des Plattengebildes angeordneten Umfangsabschnitt eine komplette Materialaussparung vorgesehen.

Gemäß einer bevorzugten Ausführungsform der Erfindung ist vorgesehen, dass die Rampen und die Gegenrampen jeweils durch eine sägezahnförmige Umfangsstruktur gebildet werden. Eine solche Ausgestaltung ist von der "Wedge Clutch"-artigen Bauweise bekannt. Hier ergibt sich jeweils eine erste Rampe mit einer ersten Steigung und eine zweite Rampe mit einer gegenüber der Steigung der ersten Rampe extrem höheren Steigung, jedoch anderem Vorzeichen der Steigung.

Gemäß einer weiteren bevorzugten Ausführungsform der Erfindung sind die Rampen des inneren Rotationselements und die Gegenrampen des Plattengebildes drehsymmetrisch (radiärsymmetrisch) angeordnet. Auch diese Ausgestaltung ist von der "Wedge Clutch"-artigen Bauweise bekannt.

Schließlich ist mit Vorteil vorgesehen, dass das innere Rotationselement als Innenring und das äußere Rotationselement als Außenring ausgebildet ist.

Nachfolgend wird die Erfindung unter Bezugnahme auf die anliegenden Zeichnungen anhand von bevorzugten Ausführungsbeispielen exemplarisch erläutert, wobei die nachfolgend dargestellten Merkmale sowohl jeweils einzeln als auch in Kombination einen Aspekt der Erfindung darstellen können. Es zeigt:
Fig. 1: eine Fliehkraftkupplung gemäß einer bevorzugten Ausführungsform der Erfindung in einer Seitenansicht,
Fig. 2: die obere Hälfte der in Fig. 1 gezeigten Fliehkraftkupplung in einer Schnittdarstellung entlang der Drehachse und
Fig. 3: ein im Wesentlichen ringförmiges Plattengebilde, das eine Fliehgewichtseinrichtung der Fliehkraftkupplung bildet.

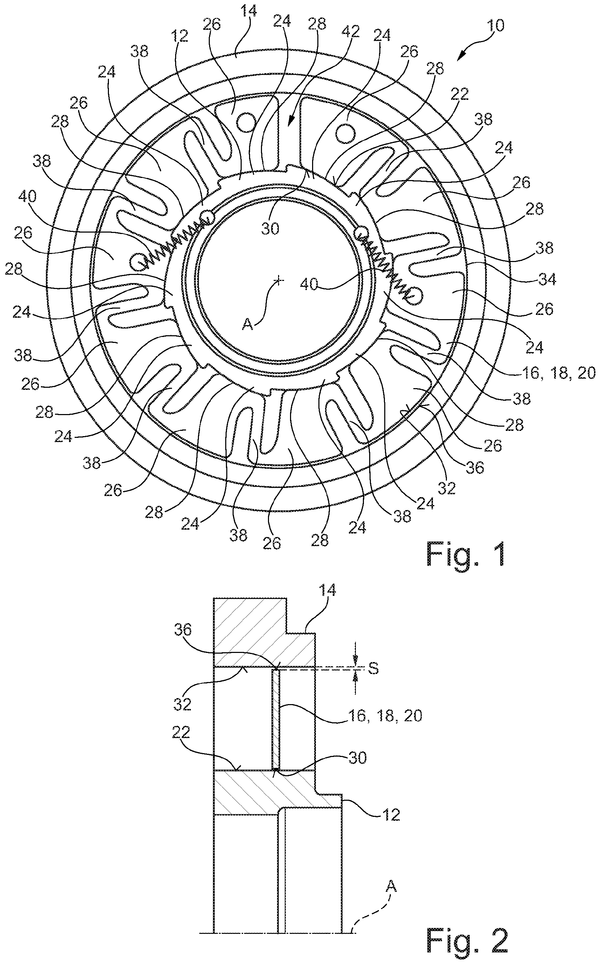

Die Fig. 1 zeigt eine Fliehkraftkupplung 10 für einen (nicht gezeigten) Antriebsstrang eines Kraftrades oder sonstigen Kraftfahrzeugs. Ein solches Kraftrad ist insbesondere ein Motorroller. Die Fliehkraftkupplung 10 weist drei bezüglich einer Drehachse 12 koaxial angeordnete Hauptkomponenten 12, 14, 16 auf. Diese sind: ein als Innenring ausgebildetes inneres Rotationselement 12, ein als Außenring ausgebildetes äußeres Rotationselement 14 und eine radial zwischen diesen beiden Rotationselementen 12, 14 angeordnete Fliehgewichtseinrichtung 16, die als ein aus einem einzelnen Plattenelement 18 bestehenden und im Wesentlichen ringförmigen Plattengebilde 20 ausgebildet ist. Das Plattenelement 18 ist dabei einstückig ausgebildet. Der Außenumfang 22 des inneren Rotationselements 12 weist mehrere Rampen 24 auf. Das das innere Rotationselement 12 umgebende Plattengebilde 18 weist mehrere umfänglich verteilte Umfangsabschnitte auf, die entsprechend mehrere umfänglich verteilte Fliehgewichte 26 bilden, wobei jedes dieser Fliehgewichte 26 an seiner nach radial Innen gewandten Seite eine Gegenrampe 28 zur Bildung eines Form- und/oder Reibschlusses mit den Rampen 24 des inneren Rotationselements 12 aufweist. Mit anderen Worten weist der so gebildete Innenumfang 30 des Plattengebildes 18 also mehrere Gegenrampen 28 zu den Rampen 24 auf. Im gezeigten Beispiel sind es zehn Fliehgewichte 26 und auch zehn Rampen 24 beziehungsweise Gegenrampen 28.

Das äußere Rotationselement 14 weist an seinem Innenumfang 32 einen Reibbelag 34 auf, wobei die Fliehkraftkupplung 10 derart ausgestaltet ist, dass sich bei einer Drehzahl n = 0 des Plattengebildes 20 ein in Fig. 2 gezeigter Ringspalt 36 zwischen dem Außenumfang 36 des Plattengebildes 20 und besagtem Innenumfang 32 des äußeren Rotationselements 14 ergibt.

Die Fliehgewichte des Plattengebildes 20 sind zur Erzeugung eines Reibschlusses mit dem äußeren Rotationselement 14 über dessen Reibbelag 34 entgegen der Wirkung einer, von federnd ausgebildeten Komponenten 38 des Plattengebildes 20 und zusätzlichem Federelement 40 gebildeten Federanordnung nach außen gegen einen Innenumfang 32 des äußeren Rotationselements 14 pressbar. Die federnd ausgestalteten Komponenten 38 des Plattengebildes 20 sind jeweils als zwischen zwei, der die Fliehgewichte 26 bildenden Umfangsabschnitte des Plattengebildes 20 angeordnete Stege ausgebildet. In einem, zwischen zwei der die Fliehgewichte 26 bildenden Umfangsabschnitte des Plattengebildes 20 ist eine komplette Materialaussparung 42, also eine Lücke in der Ringform, vorgesehen.

Die Rampen 24 werden durch eine sägezahnförmige Umfangsstruktur des inneren Rotationselements 12 gebildet und die Gegenrampen 28 werden durch eine entsprechende sägezahnförmige Umfangsstruktur des Plattengebildes 20 gebildet. Hier ergeben sich jeweils eine Rampenstruktur mit einer ersten Steigung und eine weitere Rampenstruktur mit einer nahezu radialen Ausrichtung (Sägezahnform). Die Rampen 24 des inneren Rotationselements und die Gegenrampen 28 des Plattengebildes 20 sind dabei drehsymmetrisch (radiärsymmetrisch) angeordnet. Die Anzahl der Umfangsabschnitte ergibt die "Zähligkeit" der Drehsymmetrie. Im gezeigten Beispiel also eine 10-zählige Geometrie.

Alternativ zu der Ausgestaltung, bei der das im Wesentlichen ringförmige Plattengebilde 20 ein einzelnes Plattenelement 18 aufweist, kann das Plattengebilde 20 auch einen Stapel aus mehreren Plattenelementen 18 aufweist (nicht gezeigt).

Es ergibt sich folgende Funktion der Fliehkraftkupplung 10:
Bei hinreichend hoher Drehzahl n des inneren Rotationselements 12 werden die Fliehgewichte 26 und mit ihnen das gesamte Plattengebilde 20 radial nach außen gedrückt. Am Innenumfang 30 des Plattengebildes 20 befinden sich die Gegenrampen 28, auf denen die einzelnen Rampen 24, bei Kontakt des Plattengebildes 20 mit dem äußeren Rotationselements 14 und somit Erzeugung eines entgegen der Drehrichtung gerichtetes Initialmoments, hinauf wandern und somit den Selbstverstärkungseffekt der Klemmwirkung einleiten. Anschließend erfolgt die Mitnahme des äußeren Rotationselements 14 durch die Klemmwirkung zwischen des Plattengebildes 20 zwischen innerem und äußerem Rotationselement 12, 14 gesteuert über die Reibkräfte. Die entsprechende Drehzahl, bei der ein erster Kontakt mit dem Außenring erfolgt, wird durch die Federsteifigkeit der Federanordnung von federnd ausgebildeten Komponenten 38 des mindestens einen Plattenelements 18 und/oder der zusätzlichen Federelemente 40 kontrolliert und bestimmt.

Es ergeben sich bei dieser Bauweise der Fliehkraftkupplung 10 folgende Vorteile:
- eine kompakte Bauweise gegenüber herkömmlichen Fliehkraftkupplungen,
- weniger Verschleiß durch einen einstellbaren Selbstverstärkungseffekt und
- es ist eine Bauweise ohne zusätzliches Federelement 40 möglich. Die Mitnahmedrehzahl wird durch die Steifigkeit des Plattengebildes 20 selbst bestimmt.

Die Fig. 2 zeigt die obere Hälfte der in Fig. 1 gezeigten Fliehkraftkupplung 10 (bei Drehzahl n = 0) in einer Schnittdarstellung. In dieser Darstellung ist zum einen gut erkennbar, dass das Plattengebilde 20 im gezeigten Ausführungsbeispiel nur von einem Plattenelement 18 gebildet wird, zum anderen ist auch der Ringspalt S zwischen dem Innenumfang des äußeren Rotationselements 14 und dem Außenumfang des Plattengebildes 20 gut sichtbar. Auch die Ausgestaltung des inneren Rotationselements 12 als ein Innenring (beziehungsweise eine Nabe) und des äußeren Rotationselements 14 als Außenring ist klar erkennbar.

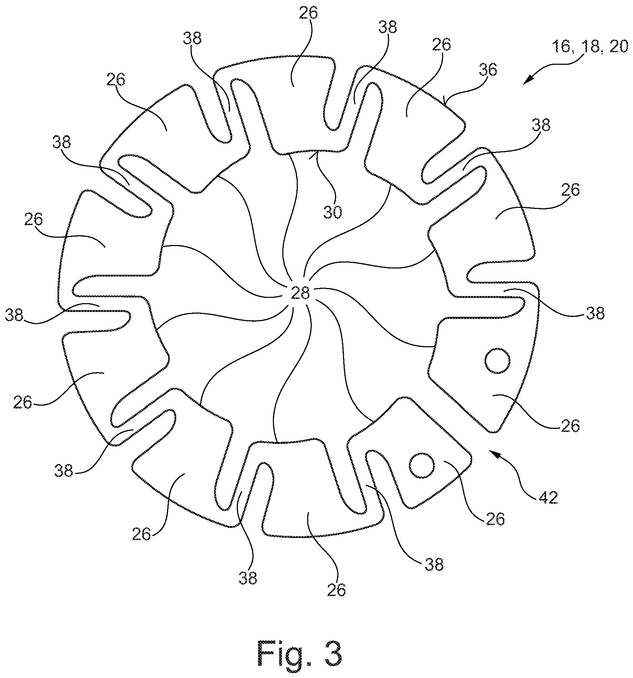

Die Fig. 3 zeigt noch einmal das ringförmige Plattengebilde 20, das die Fliehgewichtseinrichtung 16 der Fliehkraftkupplung 10 bildet, im Detail. Dabei sind die zehn umfänglich verteilten Fliehgewichte 26, die dazwischen angeordneten federnden Komponenten 38 sowie die Materialaussparung (Lücke) in einem Umfangsabschnitt klar erkennbar. Weiterhin ist die einstückige Ausgestaltung des Plattenelements 18 sichtbar. Trotz der Aussparung 42 sind das Plattenelement 18 und das daraus resultierende Plattengebilde 20 im Wesentlichen ringförmig.

### Bezugszeichenliste

- 10: Fliehkraftkupplung
- 12: Rotationselement, inneres
- 14: Rotationselement, äußeres
- 16: Fliehgewichtseinrichtung
- 18: Plattenelement
- 20: Plattengebilde
- 22: Außenumfang (inneres Rotationselement)
- 24: Rampe
- 26: Fliehgewicht
- 28: Gegenrampe
- 30: Innenumfang (Plattengebilde)
- 32: Innenumfang (äußeres Rotationselement)
- 34: Reibbelag
- 36: Außenumfang (Plattengebilde)
- 38: Komponente, federnd
- 40: Federelement, zusätzlich
- 42: Materialaussparung
- A: Rotationsachse
- S: Ringspalt

## Patentansprüche

1. Fliehkraftkupplung (10), insbesondere für einen Antriebsstrang eines Kraftrades oder sonstigen Kraftfahrzeugs, mit
- einem inneren Rotationselement (12), dessen Außenumfang (22) mehrere Rampen (24) aufweist,
- mindestens einer das innere Rotationselement (12) umgebenden Fliehgewichtseinrichtung (16), die mehrere umfänglich verteilte Fliehgewichte (26) aufweist und deren Innenumfang (30) mehrere Gegenrampen (28) zur Bildung eines Form- und/oder Reibschlusses mit den Rampen (24) des inneren Rotationselements (12) aufweist, und
- einem die mindestens eine Fliehgewichtseinrichtung (16) umgebenden äußeren Rotationselement (14),
wobei die Fliehgewichte (26) der Fliehgewichtseinrichtung (16) zur Erzeugung eines Reibschlusses mit dem äußeren Rotationselement (14) über einen Reibbelag (34) entgegen der Wirkung einer Federanordnung (38, 40) nach außen gegen einen Innenumfang (32) des äußeren Rotationselements (14) pressbar sind, **dadurch gekennzeichnet, dass** die Fliehgewichtseinrichtung (16) von einem im Wesentlichen ringförmigen Plattengebilde (20) mit einem einzelnen Plattenelement (18) oder einem Stapel aus mehreren Plattenelementen (18) gebildet wird, wobei das Plattengebilde (20) mehrere umfänglich verteilte Umfangsabschnitte aufweist, die die Fliehgewichte (26) bilden.

2. Fliehkraftkupplung nach Anspruch 1, **dadurch gekennzeichnet, dass** die Federanordnungen von federnd ausgebildeten Komponenten (38) des mindestens einen Plattenelements (18) und/oder mindestens einem zusätzlichen Federelement (40) gebildet ist.

3. Fliehkraftkupplung nach Anspruch 2, **dadurch gekennzeichnet, dass** zwischen zumindest zwei der die Fliehgewichte (26) bildenden Umfangsabschnitten des Plattengebildes (20) eine der federnd ausgestalteten Komponenten (38) des Plattengebildes (20) angeordnet ist.

4. Fliehkraftkupplung nach Anspruch 2 oder 3, **dadurch gekennzeichnet, dass** das mindestens eine zusätzliche Federelement (40) zwischen Plattengebilde (20) und innerem Rotationselement (12) angeordnet ist.

5. Fliehkraftkupplung nach einem der Ansprüche 1 bis 4, **dadurch gekennzeichnet, dass** die Fliehkraftkupplung (10) derart ausgestaltet ist, dass sich bei einer Drehzahl n = 0 des Plattengebildes (20) ein Ringspalt (S) zwischen dem Außenumfang (36) des Plattengebildes (20) und dem Innenumfang (32) des äußeren Rotationselements (14) ergibt.

6. Fliehkraftkupplung nach einem der Ansprüche 1 bis 5, **dadurch gekennzeichnet, dass** das äußere Rotationselement (14) den Reibbelag (34) an seinem Innenumfang (32) aufweist.

7. Fliehkraftkupplung nach einem der Ansprüche 1 bis 6, **dadurch gekennzeichnet, dass** das mindestens eine Plattenelement (18) einstückig ausgebildet ist.

8. Fliehkraftkupplung nach einem der Ansprüche 1 bis 7, **dadurch gekennzeichnet, dass** in einem, zwischen zwei der die Fliehgewichte (26) bildenden Umfangsabschnitten des Plattengebildes (20) angeordneten Umfangsabschnitt eine komplette Materialaussparung (42) vorgesehen ist.

9. Fliehkraftkupplung nach einem der Ansprüche 1 bis 8, **dadurch gekennzeichnet, dass** die Rampen (24) und die Gegenrampen (28) jeweils durch eine sägezahnförmige Umfangsstruktur gebildet sind.

10. Fliehkraftkupplung nach einem der Ansprüche 1 bis 9, **dadurch gekennzeichnet, dass** die Rampen (24) des inneren Rotationselements (12) und die Gegenrampen (28) des Plattengebildes (20) drehsymmetrisch angeordnet sind.

## Claims

1. Centrifugal clutch (10), in particular for a drive train of a motorcycle or some other motor vehicle, having
- an inner rotary element (12), the outer circumference (22) of which has a plurality of ramps (24),
- at least one flyweight device (16) surrounding the inner rotary element (12), said flyweight device (16) having a plurality of circumferentially distributed flyweights (26) and the inner circumference (30) of said flyweight device (16) having a plurality of counterpart ramps (28) for forming a form-fit and/or friction fit with the ramps (24) of the inner rotary element (12), and
- an outer rotary element (14) surrounding the at least one flyweight device (16),
wherein, in order to create a friction fit with the outer rotary element (14), the flyweights (26) of the flyweight device (16) are pressable outwards against an inner circumference (32) of the outer rotary element (14) counter to the action of a spring arrangement (38, 40) via a friction lining (34) ,
**characterized in that** the flyweight device (16) is formed from a substantially annular plate structure (20) having an individual plate element (18) or a stack of several plate elements (18), wherein the plate structure (20) has several circumferentially distributed circumferential portions which form the flyweights (26).

2. Centrifugal clutch according to Claim 1, **characterized in that** the spring arrangements is formed from resiliently configured components (38) of the at least one plate element (18) and/or from at least one additional spring element (40).

3. Centrifugal clutch according to Claim 2, **characterized in that**, between at least two of the circumferential portions, forming the flyweights (26), of the plate structure (20), one of the resiliently configured components (38) of the plate structure (20) is arranged.

4. Centrifugal clutch according to Claim 2 or 3, **characterized in that** the at least one additional spring element (40) is arranged between the plate structure (20) and inner rotary element (12).

5. Centrifugal clutch according to one of Claims 1 to 4, **characterized in that** the centrifugal clutch (10) is configured such that, at a speed n = 0 of the plate structure (20), an annular gap (S) arises between the outer circumference (36) of the plate structure (20) and the inner circumference (32) of the outer rotary element (14).

6. Centrifugal clutch according to one of Claims 1 to 5, **characterized in that** the outer rotary element (14) has the friction lining (34) on its inner circumference (32).

7. Centrifugal clutch according to one of Claims 1 to 6, **characterized in that** the at least one plate element (18) is formed integrally.

8. Centrifugal clutch according to one of Claims 1 to 7, **characterized in that**, in a circumferential portion arranged between two of the circumferential portions of the plate structure (20) that form the flyweights (26), a complete material cutout (42) is provided.

9. Centrifugal clutch according to one of Claims 1 to 8, **characterized in that** the ramps (24) and the counterpart ramps (28) are each formed by a sawtooth-shaped circumferential structure.

10. Centrifugal clutch according to one of Claims 1 to 9, **characterized in that** the ramps (24) of the inner rotary element (12) and the counterpart ramps (28) of the plate structure (20) are arranged in a rotationally symmetric manner.

## Revendications

1. Embrayage centrifuge (10), destiné notamment à une ligne cinématique d'une motocyclette ou d'un autre véhicule automobile, comprenant
- un élément de rotation (12) interne, dont le pourtour extérieur (22) comporte plusieurs rampes (24),
- au moins un système de poids centrifuges (16) entourant l'élément de rotation (12) interne, qui comporte plusieurs poids centrifuges (26) distribués sur le pourtour et dont le pourtour intérieur (30) comporte plusieurs contre-rampes (28), pour la création d'une complémentarité de forme et/ou d'une complémentarité par friction avec les rampes (24) de l'élément de rotation (12) interne, et
- un élément de rotation (14) externe, entourant l'au moins un système de poids centrifuges (16), pour créer une complémentarité par friction avec l'élément de rotation (14) externe, les poids centrifuges (26) du système de poids centrifuges (16) étant susceptibles d'être pressés par l'intermédiaire d'une garniture de friction (34), à l'encontre de l'action d'un ensemble de ressorts (38, 40) vers l'extérieur, contre un pourtour intérieur (32) de l'élément de rotation (14) externe, **caractérisé en ce que** le système de poids centrifuges (16) est formé d'une structure de plaques (20) de forme sensiblement annulaire, dotée d'un élément en plaque (18) individuel ou d'une pile de plusieurs éléments en plaques (18), la structure de plaques (20) comportant plusieurs segments périphériques distribués sur le pourtour qui forment les poids centrifuges (26).

2. Embrayage centrifuge selon la revendication 1, **caractérisé en ce que** les ensembles de ressorts est formé de composants (38) de l'au moins un élément en plaque (18) conçus en version résiliente et/ou d'au moins un élément formant ressort (40) additionnel.

3. Embrayage centrifuge selon la revendication 2, **caractérisé en ce qu'**entre au moins deux des segments périphériques de la structure de plaques (20) formant les poids centrifuges (26) est placé l'un des composants (38) conçus en version résiliente de la structure de plaques (20).

4. Embrayage centrifuge selon la revendication 2 ou 3, **caractérisé en ce que** l'au moins un élément formant ressort (40) additionnel est placé entre la structure de plaques (20) et l'élément de rotation (12) interne.

5. Embrayage centrifuge selon l'une quelconque des revendications 1 à 4, **caractérisé en ce que** l'embrayage centrifuge (10) est conçu de sorte qu'à une vitesse de rotation n = 0 de la structure de plaques (20), une fente annulaire (S) se forme entre le pourtour extérieur (36) de la structure de plaques (20) et le pourtour intérieur (32) de l'élément de rotation (14) externe.

6. Embrayage centrifuge selon l'une quelconque des revendications 1 à 5, **caractérisé en ce que** l'élément de rotation (14) externe comporte sur son pourtour intérieur (32) la garniture de friction (34).

7. Embrayage centrifuge selon l'une quelconque des revendications 1 à 6, **caractérisé en ce que** l'au moins un élément en plaque (18) est conçu en monobloc.

8. Embrayage centrifuge selon l'une quelconque des revendications 1 à 7, **caractérisé en ce que** dans un segment périphérique, placé entre deux des segments périphériques de la structure de plaques (20) formant les poids centrifuges (26) est prévu un évidement de matière (42) complet.

9. Embrayage centrifuge selon l'une quelconque des revendications 1 à 8, **caractérisé en ce que** les rampes (24) et les contre-rampes (28) sont formées chacune par une structure périphérique en forme de dents de scie.

10. Embrayage centrifuge selon l'une quelconque des revendications 1 à 9, **caractérisé en ce que** les rampes (24) de l'élément de rotation (12) interne et les contre-rampes (28) de la structure de plaques (20) sont placées de manière symétrique en rotation.
